**Europäisches Patentamt**

**European Patent Office**

**Office européen des brevets**

(11) Numéro de publication: **0 125 988**
**B1**

# FASCICULE DE BREVET EUROPEEN

(45) Date de publication du fascicule du brevet:
**01.04.87**

(51) Int. Cl.⁴: **G 01 N 3/28**

(21) Numéro de dépôt: **84400931.6**

(22) Date de dépôt: **07.05.84**

(54) Procédé et appareil de détermination de la qualité d'une tôle d'acier mince revêtue ou non.

(30) Priorité: **09.05.83 FR 8307719**

(43) Date de publication de la demande:
**21.11.84 Bulletin 84/47**

(45) Mention de la délivrance du brevet:
**01.04.87 Bulletin 87/14**

(84) Etats contractants désignés:
**AT BE CH DE FR GB IT LI LU NL SE**

(56) Documents cités:
**FR - A - 740 502
FR - A - 992 589
FR - A - 2 203 511
FR - A - 2 427 606**

(73) Titulaire: **UNION SIDERURGIQUE DU NORD ET DE L'EST DE LA FRANCE par abréviation "USINOR",
Défense 9 4 Place de la Pyramide, F-92070 Puteaux (FR)**

(72) Inventeur: **Brun, Charles, 46 Rue Louis Blanc,
F-60160 Montataire (FR)**
Inventeur: **Bailleul, Jean-François, 9 rue Alexandre
Fleming, F-59640 Grande-Synthe (FR)**
Inventeur: **Coolen, Françoise, 302 rue de Douvres,
F-59240 Dunkerque (FR)**
Inventeur: **Lecendre, Freddy, Rue B. Russel,
F-59640 Grande-Synthe (FR)**

(74) Mandataire: **Moncheny, Michel et al, c/o Cabinet
Lavoix 2 Place d'Estienne d'Orves, F-75441 Paris
Cedex 09 (FR)**

**Description**

La présente invention est relative à un procédé et un appareil de détermination de la qualité d'une tôle d'acier mince revêtue ou non, et en particulier d'une tôle d'acier destinée à la fabrication de fer blanc de type pour emboutissage-étirage.

Le fer blanc de qualité pour emboutissage-étirage est destiné à la fabrication de boîtes de conserves pour les aliments ou les boissons, à l'aide d'un procédé dans lequel on réalise le corps de la boîte par emboutissage d'une coupelle et étirage des parois, puis tombage des bords supérieurs.

Ces opérations soumettent le métal à des forces de cisaillement dans les parois latérales de la boîte, alors que l'opération de tombage des bords réalisée sur le métal déformé est également critique pour obtenir un bord régulier non fendu. Les défauts internes du métal peuvent conduire, dans ces conditions d'emboutissage et d'étirage sévères, à la formation de craquelures dans les parois de la boîte ou les bords tombés, rendant ainsi le métal impropre à la fabrication de telles boîtes.

On connaît déjà d'après le brevet FR-A-740502 un procédé et un appareil permettant de déterminer l'aptitude à l'emboutissage de tôles, à l'aide d'un essai de traction soumettant simultanément l'éprouvette à un travail de pliage et de redressement sous l'action d'un ou de plusieurs doigts se déplaçant alternativement le long de l'éprouvette qui est maintenue en traction à chacune de ses extrémités, et ce, jusqu'à rupture de cette dernière.

Cependant un tel procédé ne permet pas de déterminer l'état inclusionnaire de l'acier, c'est-à-dire la qualité de cet acier quant à sa teneur en inclusions, ce qui est tout-à-fait essentiel dans les applications envisagées.

Il y a donc un besoin d'un procédé de détermination de la qualité de la tôle noire initiale devant être soumise au processus d'étamage pour la fabrication de fer blanc, avant la fabrication des boîtes elles-mêmes.

La présente invention vise à fournir un tel procédé de détermination de la qualité d'une tôle d'acier, notamment destinée à fabriquer du fer blanc de type pour emboutissage-étirage et un appareil pour sa mise en œuvre.

Elle a ainsi pour objet un procédé de détermination de la qualité d'un tôle d'acier mince revêtue ou non, caractérisé en ce qu'il consiste à découper une bande dans la direction travers par rapport à la direction de laminage d'une bobine de tôle d'acier, à soumetre cette bande à des conditions d'étirage par compression sous flexion, au point de compression, et à examiner les craquelures éventuelles apparaissant sur la surface de la bande étirée.

L'étirage de la bande est réalisé en comprimant la bande sur toute sa largeur entre deux mâchoires dont l'écartement est inférieur à l'épaisseur de la bande et en faisant subir à cette bande un changement de direction au point de compression de façon à obtenir l'étirage sous flexion.

L'étirage est réalisé en une ou plusieurs passes de façon à obtenir un allongement total de la bande de 5 à 30%.

La bande d'acier découpée a une largeur de 2 à 10 cm et une longueur égale à la largeur de la bobine.

Le procédé de la présente invention est en particulier applicable à la détermination de la qualité d'une tôle d'acier destinée à la fabrication de fer blanc notamment de qualité pour emboutissage-étirage.

La présente invention a également pour objet un dispositif pour la mise en œuvre du procédé défini ci-dessus, caractérisé en ce qu'il comprend un bâti supportant des moyens de traction d'une bande d'acier et une tête d'étirage sous flexion, solidaire du bâti et à travers laquelle on fait passer la bande d'acier sous l'action des moyens de traction.

La tête d'étirage sous flexion comprend deux mâchoires exerçant une action de compression sur la bande, alors qu'elle est en même temps soumise à un changement de direction.

Selon une caractéristique de ce dispositif, la tête d'étirage sous flexion est constituée de deux mâchoires mobiles opposées mâle et femelle, la mâchoire mâle comprenant une surface plane sur laquelle fait saillie une forme demi-cylindrique dont l'axe est perpendiculaire à la direction de déplacement de la bande, la mâchoire femelle comprenant une surface plane dans laquelle est ménagée une rainure sensiblement demi-cylindrique dont l'axe est parallèle à l'axe de la partie en saillie de la mâchoire mâle et disposé dans le même plan vertical, mais légèrement en retrait par rapport à la surface de la mâchoire femelle, de façon à exercer une action de compression et de flexion de la bande.

L'invention est exposée ci-après plus en détail à l'aide des dessins annexés, qui en représentent seulement un mode de réalisation.

Sur ces dessins:

La fig. 1 est une vue en élévation de la machine de détermination de la qualité de l'acier du type pour emboutissage-étirage;

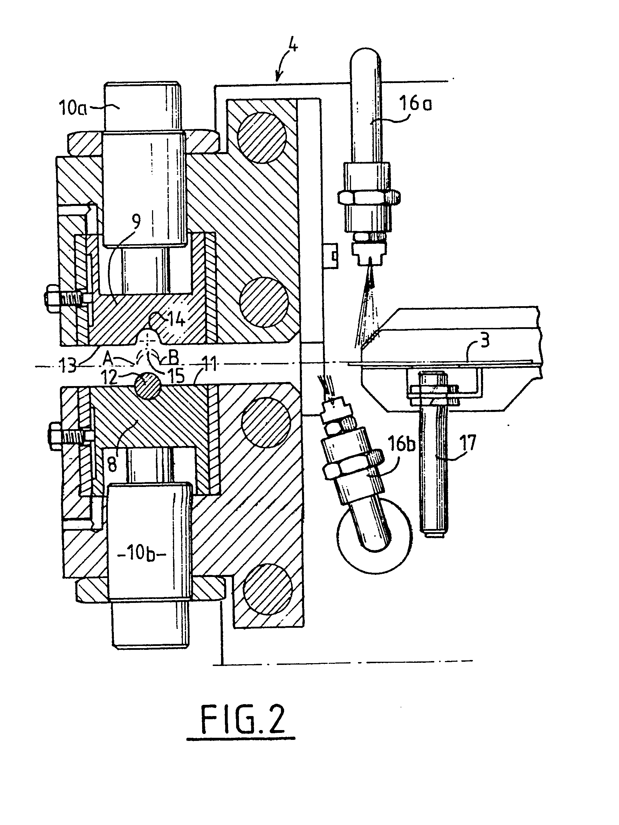

la fig. 2 est une vue en coupe de la tête d'étirage sous flexion de la machine de la fig. 1.

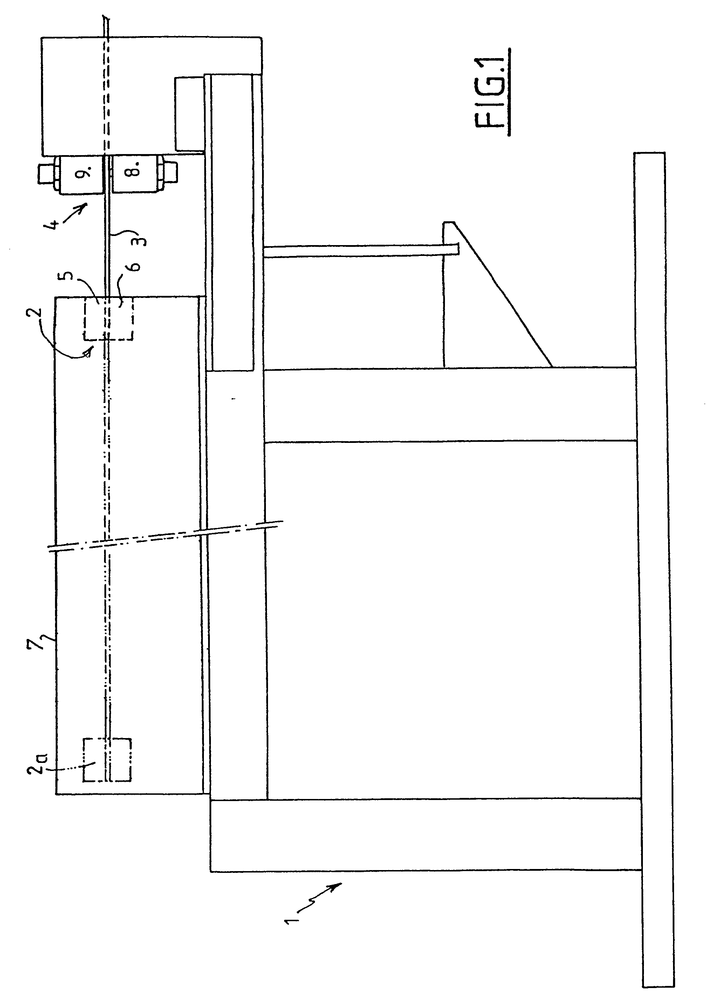

La machine d'essai représentée à la fig. 1 comprend un bâti 1 supportant des moyens de traction 2 d'une bande 3 soumise à un étirage sous flexion dans une tête 4.

Les moyens de traction 2 qui ne sont pas décrits ni représentés en détails car ils sont bien connus de l'homme de métier comportent des mâchoires de serrage 5 et 6, qui serrent la bande 3 à une de ses extrémités et se déplacent en translation horizontale dans un tunnel 7 de protection jusqu'à une position représentée en 2a. La bande 3 passe dans la tête 4 en étant insérée à partir de la droite de la figure, puis serrée entre les mâchoires de serrage 5 et 6.

La tête 4 d'étirage sous flexion comporte une mâchoire mâle 8 et une mâchoire femelle 9 opposées, qui peuvent être rapprochées et éloignées à l'aide de vérins 10a, 10b, montés dans la tête 4 solidaire du bâti 1.

La mâchoire 8 comporte une surface plane 11 sur laquelle fait saillie un poinçon 12 de forme demi-cylindrique dont l'axe est situé dans le plan de la surface 11 et perpendiculaire à la direction de déplacement de la bande.

La mâchoire femelle 9 comporte une surface plane 13 parallèle à la surface 11 et en regard de cette dernière, comportant une rainure 14 sensiblement demi-cylindrique dont l'axe est parallèle à l'axe du poinçon 12 et situé dans le même plan vertical, mais légèrement en retrait par rapport à la surface 13, de façon à exercer sur toute la largeur de la bande 3, lors de l'essai, un effet de compression sous flexion le long de deux génératrices du poinçon 12 correspondant aux points A et B.

Lorsque les mâchoires 8 et 9 sont rapprochées jusqu'à mise en contact des faces 11 et 13, un espace 15 subsiste entre le poinçon 12 et le fond de la rainure 14, cet espace étant supérieur à l'épaisseur de la bande 3 à tester.

Aux points A et B, la bande est soumise à une contrainte d'étirage par compression sous flexion sur toute sa largeur, qui constitue la caractéristique essentielle de l'invention.

La machine est en outre munie de moyens de lubrification par pulvérisation 16a et 16b d'un lubrifiant respectivement sur les faces supérieure et inférieure de la bande 3.

Les vérins sont alimentés de façon classique par un fluide hydraulique (non représenté) et la machine comporte en outre des moyens d'arrêt fin de course 17 pour l'étirage de la bande.

Lors du fonctionnement, la bande 3 est d'abord insérée entre les mâchoires 8 et 9 écartées de la tête d'étirage sous flexion 4, puis serrée entre les mâchoires de serrage 5 et 6 des moyens de traction. Les mâchoires de la tête d'étirage sous flexion sont ensuite serrées sur la bande et on exerce une traction sur la bande 3 à l'aide des moyens 2, de façon à la faire passer dans la tête 4 dans les conditions de contrainte définies ci-dissus.

La bande est préalablement lubrifiée avant son passage dans la tête 4.

On effectue un ou plusieurs passages de la bande 3 afin d'obtenir un allongement de 5 à 30%.

On examine ensuite à l'œil la bande étirée afin de déterminer la présence éventuelle de craquelures allongées ayant une longueur de l'ordre de 0,5 à 5 mm dans la direction correspondant à la direction de laminage de la bande et qui seraient révélatrices de la présence d'inclusions.

Le procédé de détermination de la qualité de la tôle noire et l'appareil pour sa mise en œuvre, d'une conception simple, permettent un dépistage rapide des défauts sous forme d'inclusions noyées dans la masse de la tôle noire, et donc une élimination des bobines dont la qualité de l'acier n'est pas satisfaisante pour l'usage envisagé. On évite ainsi en particulier la fabrication de tôles de fer blanc dont les défauts de qualité ne seraient perceptibles qu'au niveau de la fabrication du produit fini, c'est-à-dire en constatant l'obtention de boîtes embouties-étirées, dont les parois comportent des fissures ou craquelures et dont les bords tombés sont fendus. Le procédé selon l'invention permet ainsi de réaliser des économies très importantes.

On peut bien entendu également réaliser l'essai sur la tôle revêtue afin de vérifier la qualité de fer blanc en ce qui concerne sa propreté inclusionnaire déterminant son aptitude à l'obtention des boîtes mentionnées ci-dessus.

**Revendications**

1. Procédé de détermination de la qualité d'une tôle d'acier mince revêtue ou non, caractérisé en ce qu'il consiste à découper une bande dans la direction travers par rapport à la direction de laminage d'une bobine de tôle d'acier, à soumettre cette bande à des conditions d'étirage par compression sous flexion au point de compression, et à examiner les craquelures éventuelles apparaissant sur la surface de la bande étirée.

2. Procédé selon la revendication 1, caractérisé en ce qu'on soumet la bande à un allongement total de 5 à 30%, en une ou plusieurs passes.

3. Procédé selon l'une quelconque des revendications précédentes, caractérisé en ce que la bande d'acier découpée a une largeur de 2 à 10 cm et une longueur égale à la largeur de la bobine.

4. Appareil pour la détermination de la qualité d'une tôle d'acier mince revêtue ou non, caractérisé en ce qu'il comprend un bâti (1) supportant des moyens de traction (2) d'une bande d'acier et une tête (4) d'étirage par compression sous flexion, solidaire du bâti et à travers laquelle on fait passer la bande d'acier (3) sous l'action des moyens de traction (2).

5. Appareil selon la revendication 4, caractérisé en ce que la tête (4) d'étirage sous flexion comprend deux mâchoires (8, 9) exerçant une action de compression sur la bande (3), alors qu'elle est en même temps soumise à un changement de direction.

6. Appareil selon la revendication 4 ou 5, caractérisé en ce que la tête (4) d'étirage sous flexion est constituée de deux mâchoires mobiles opposées mâle (8) et femelle (9), la mâchoire mâle (8) comprenant une surface plane (11) sur laquelle fait saillie une forme demi-cylindrique (12) dont l'axe est perpendiculaire à la direction de déplacement de la bande (3), la mâchoire femelle (9) comprenant une surface plane (13) dans laquelle est ménagée un rainure (14) sensiblement demi-cylindrique dont l'axe est parallèle à l'axe de la partie en saillie (12) de la mâchoire mâle (8) et disposé dans le même plan vertical, mais légèrement en retrait par rapport à la surface (13) de la mâchoire femelle (9), de façon à exercer une action de compression et de flexion sur la bande.

7. Appareil selon l'une quelconque des revendications 2 à 6, caractérisé en ce qu'il comprend en amont par rapport à la tête d'étirage sous flexion des moyens de lubrification (16a, 16b) des deux faces de la bande.

**Patentansprüche**

1. Verfahren zur Bestimmung der Qualität von beschichteten oder unbeschichteten Blechen, dadurch gekennzeichnet, dass es die folgenden Schritte umfasst: Ausschneiden eines Streifens aus einer Stahlblechrolle in der Richtung quer zur Walzrichtung, Recken des Streifens durch Druckausübung unter Biegung an der Stelle der Druckausübung und Prüfen von eventuellen Rissen in der Oberfläche des gereckten Streifens.

2. Verfahren nach Anspruch 1, dadurch gekennzeichnet, dass der Streifen in ein oder mehreren Durchgängen um 5 bis 30% gereckt wird.

3. Verfahren nach Anspruch 1 oder 2, dadurch gekennzeichnet, dass der ausgeschnittene Stahlstreifen eine Breite von 2 bis 10 cm und eine der Breite der Rolle entsprechende Länge aufweist.

4. Vorrichtung zur Bestimmung der Qualität eines beschichteten oder unbeschichteten Stahlbleches, gekennzeichnet durch ein Gestell (1), das Ziehmittel (2) zum Ziehen eines Stahlstreifens und einen fest mit dem Gestell verbundenen Kopf (4) zum Strecken durch Druckausübung unter Biegung umfasst, über den der Stahlstreifen (3) mit Hilfe der Ziehmittel (2) gezogen wird.

5. Vorrichtung nach Anspruch 4, dadurch gekennzeichnet, dass der Kopf (4) zum Strecken unter Biegung zwei Backen (8, 9) aufweisen, die eine Kompressionswirkung auf den Streifen 3 ausüben, während der Streifen gleichzeitig einer Richtungsänderung unterzogen wird.

6. Vorrichtung nach Anspruch 4 oder 5, dadurch gekennzeichnet, dass der Kopf (4) zum Strecken unter Biegung durch zwei einander gegenüberliegende, bewegliche, als Patrize (8) und Matrize (9) ausgebildete Backen gebildet wird, dass die Patrize (8) eine ebene Oberfläche (11) aufweist, auf der sich eine halbzylindrische Form (12) erhebt, deren Achse rechtwinklig zur Bewegungsrichtung des Streifens (3) orientiert ist, und dass die Matrize (9) eine ebene Oberfläche (13) aufweist, in der eine im wesentlichen halbzylindrische Rinne (14) ausgebildet ist, deren Achse parallel zur Achse der erhabenen Form (12) der Patrize (8) und in der gleichen vertikalen Ebene verläuft, jedoch in bezug auf die Oberfläche (13) der Matrize (9) derart geringfügig zurückgesetzt ist, dass eine Kompressions- und Biegewirkung auf den Streifen ausgeübt wird.

7. Vorrichtung nach irgendeinem der Ansprüche 2 bis 6, dadurch gekennzeichnet, dass stromaufwärts des Kopfes zum Strecken unter Biegung Schmiereinrichtungen (16a, 16b) zum Schmieren der beiden Oberflächen des Streifens angeordnet sind.

**Claims**

1. A process for determining the quality of a thin coated or uncoated steel sheet, characterised in that it comprises cutting a strip in the transverse direction relative to the direction of rolling a reel of a steel sheet, subjecting said strip to drawing conditions by compression while bending the strip at the compression point, and examining the possible cracking which appears on the surface of the drawn strip.

2. A process according to claim 1, characterised in that it comprises subjecting the strip to a total elongation of 5 to 30% in one or more passes.

3. A process according to claim 1 or 2, characterised in that the cut steel strip has a width of 2 to 10 cm and a length equal to the width on the reel.

4. An apparatus for determining the quality of a thin coated or uncoated steel sheet, characterised in that it comprises a frame (1) supporting means (2) for exerting a traction on a steel strip and a head (4) for effecting a drawing by compression and a bending of the strip and connected to the frame and through which the steel strip (3) is passed under the action of the traction means (2).

5. An apparatus according to claim 4, characterised in that the head (4) for drawing while bending comprises two jaws (8, 9) exerting a compression action on the strip (3) while it is at the same time subjected to a change in direction.

6. An apparatus according to claim 4 or 5, characterised in that the head (4) for drawing while bending is constituted by two opposed and movable male (8) and female (9) jaws, the male jaw (8) comprising a planar surface (11) from which projects a semi-cylindrical form (12) whose axis is perpendicular to the direction of displacement of the strip (3), the female jaw (9) comprising a planar surface (13) in which is formed a semicylindrical groove (14) whose axis is parallel to the axis of the projecting portion (12) of the male jaw (8) and is disposed in the same vertical plane, but slightly set back relative to the surface (13) of the female jaw (9), so as to exert a compression and bending action on the strip.

7. An apparatus according to any one of the claims 2 to 6, characterised in that it comprises, upstream of the head for drawing while bending, means (16a, 16b) for lubricating the two sides of the strip.

FIG.1

## FIG.2